# EUROPÄISCHE PATENTSCHRIFT

(11) **EP 0 811 587 B1**
(45) Veröffentlichungstag und Bekanntmachung des Hinweises auf die Patenterteilung: **09.08.2000**
(21) Anmeldenummer: 97108293.8
(22) Anmeldetag: 22.05.1997
(51) Int. Cl.: C04B 35/472, C04B 35/491

(54) **Verfahren zur Herstellung poröser Keramik der Zusammensetzung Pb(ZrxTi1-x)O3**
Process for producing porous ceramic with the composition Pb(ZrxTi1-x)O3
Procédé de fabrication d'un matériau céramic poreux de composition Pb(ZrxTi1-x)O3

(30) Priorität: 05.06.1996 DE 19622500
(43) Veröffentlichungstag der Anmeldung: 10.12.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: Löbmann, Peer, 97072 Würzburg (DE); Glaubitt, Walther, 97209 Veitshöchheim (DE); Fricke, Jochen Prof. Dr., 97218 Gerbrunn (DE)

(56) Entgegenhaltungen:
- EP-A- 0 470 898
- EP-A- 0 653 377
- US-A- 5 407 757
- DATABASE WPI Section Ch, Week 9101 Derwent Publications Ltd., London, GB; Class L03, AN 91-004202 XP002040217 & JP 02 281 769 A (OKI ELECTRIC IND CO LTD) , 19.November 1990
- PATENT ABSTRACTS OF JAPAN vol. 013, no. 402 (C-633), 6.September 1989 & JP 01 145384 A (SUMITOMO METAL MINING CO LTD), 7.Juni 1989,
- JOURNAL OF THE AMERICAN CERAMIC SOCIETY, Bd. 71, Nr. 5, Mai 1988, Seiten C280-C282, XP000037819 DEKLEVA T W ET AL: "SOL-GEL PROCESSING OF LEAD TITANATE IN 2-METHOXYETHANOL: INVESTIGATIONS INTO THE NATURE OF THE PREHYDROLYZED SOLUTIONS"
- DATABASE WPI Section Ch, Week 9002 Derwent Publications Ltd., London, GB; Class L01, AN 90-012875 XP002040218 & JP 01 294 516 A (COLLOID RESEARCH KK) , 28.November 1989
- PATENT ABSTRACTS OF JAPAN vol. 096, no. 012, 26.Dezember 1996 & JP 08 198615 A (AGENCY OF IND SCIENCE &TECHNOL)

## Beschreibung

Die Erfindung betrifft ein Verfahren zur Herstellung poröser Bleititanat (PT)- oder Bleizirkonattitanat (PZT)-Keramik der Zusammensetzung Pb(ZrₓTi₁₋ₓ)O₃, mit x = 0 bis 0.9, unter Verwendung eines Sol-Gel-Verfahrens.

Festkörper und Gase weisen deutlich unterschiedliche akustische Impedanzen auf. Deshalb sind konventionelle Ultraschallsensoren und -aktuatoren aus dichten Keramiken und Keramik-Polymer-Kompositen nur sehr begrenzt für die Übertragung von Signalen in gasförmigen Medien geeignet. Poröse, piezoaktive Materialien dagegen sind in ihrer Dichte und Schallgeschwindigkeit und damit in ihrer akustischen Impedanz um Größenordnungen besser an den Luftraum angepaßt.

Zur Herstellung solch poröser Materialien sind zwei Verfahren bekannt, nämlich ein Schlickergußverfahren und ein Aerogelverfahren. Beim Schlickergußverfahren wird PZT-Pulver mit Methyl-Ethyl-Cellulose oder anderen Bindern vermischt und kaltisostatisch verpresst. Nach Temperaturbehandlung bis 1100 °C erhält man keramische Materialien mit Porositäten um 50 % (G. Galassi et al., Fourth Euro Ceramics 5 (1995), 25 - 32). In der EP 0470898 A1 ist ein Aerogelverfahren beschrieben, mit dem ein keramisches Gel (PZT) in Anwesenheit eines Lösungsmittels aus Bleicarboxylaten und Titan/Zirkoniumalkoxiden über einen Sol-Gel-Prozeß hergestellt wird. Durch Anwendung von Temperaturen und Drucken, die dieses Lösungsmittel in den überkritischen Zustand überführen, erhält man ein Material in poröser Form als Aerogel. Durch Calcinieren werden daraus kristalline Keramiken mit hoher Porosität erhalten. Es hat sich jedoch gezeigt, daß Bleicarboxylate, wie z.B. Bleiacetat-Trihydrat (PB(OAc)₂·3 H₂O), nur in sehr geringem Umfang in den genannten Lösungsmitteln, wie Methanol, Ethanol, Isopropanol oder Aceton, solvatisiert werden, aus denen dann die überkritische Trocknungen durchgeführt werden. Nur unter Schwierigkeiten lassen sich wegen der geringen Blei- und Titan/Zirkonium-Konzentration durch Hydrolyse Naßgele erzeugen. Diese weisen außerdem eine so filigrane Gerüststruktur auf, daß sie bei einer überkritischen Trocknung im eigenen Lösungsmittel fast vollständig zerstört werden. Nach dem in der EP 0470898 A1 beschriebenen Verfahren können keine Monolithe hergestellt werden.

Aufgabe der vorliegenden Erfindung ist es, ein Verfahren bereit zu stellen, mit dem stabile, hochporöse und monolithische Bleititanat (PT)- oder Bleizirkonattitanat (PZT)-Keramiken hergestellt werden können. Das Verfahren soll die Herstellung hochporöser Materialien der Bleititanat- und Bleizirkonattitanatstöchiometrie ermöglichen. Diese hochporösen Materialien sollen sich ohne Zerstörung der Monolithe in die Perowskitstruktur überführen lassen. Außerdem soll der Zirkonatanteil der Keramik in weiten Bereichen variierbar sein. Ferner soll das Verfahren einfach, kostengünstig und unter geringem labortechnischem Aufwand durchführbar sein.

Gelöst wird diese Aufgabe durch ein Verfahren, daß folgende Merkmale aufweist:
- man fertigt eine Lösung, deren Konzentration, bezogen auf Pb(ZrₓTi₁₋ₓ)O₃, mindestens 0.5-molar ist, und die die folgende Komponenten a), b) und c) enthält:
   a) eines oder mehrere polare Lösungsmittel mit komplexierenden, chelatisierenden Eigenschaften,
   b) eines oder mehrere Pb(II)- und/oder Pb(IV)-Carboxylate, die sich von substituierten oder unsubstituierten, einwertigen oder mehrwertigen, gesättigten oder ungesättigten, geradkettigen, verzweigten, cyclischen oder aromatischen Carbonsäuren oder Hydroxycarbonsäuren mit 1 bis 18 Kohlenstoff-Atomen ableiten, und
   c) eine oder mehrere Titan- und gegebenenfalls Zirkonium-Verbindungen, die sich von Verbindungen der allgemeinen Formel I ableiten,

      M(OR)₄ (I)

      in der M Titan oder Zirkonium bedeutet und die Reste R gleich oder verschieden sind und geradkettige, verzweigte oder cyclische Alkyl- oder Alkenyl-Reste mit 1 bis 10 Kohlenstoff-Atomen darstellen, die gegebenenfalls eine oder mehrere Carbonyl- und/oder Ester- und/oder Carboxyl-Funktionen aufweisen;
- zur hydrolytischen Kondensation versetzt man die resultierende Lösung mit mindestens 2.5 Äquivalenten Wasser, bezogen auf Pb(ZrₓTi₁₋ₓ)O₃, gegebenenfalls in Anwesenheit eines Lösungsvermittlers und/oder eines Katalysators;
- man läßt das resultierende Gel bis über den Gelpunkt hinaus altern;
- man ersetzt das polare Lösungsmittel in den Poren des Gels durch ein nicht chelatisierendes, überkritisch trockenbares Lösungsmittel geringerer Polarität;
- man trocknet das resultierende Gel unter überkritischen Bedingungen;
- man tempert das resultierende Aerogel bis zur vollständigen Kristallisation der gewünschten Phase.

Geeignete Zr- oder Ti-Alkoholate der Formel I sind solche, bei denen die Reste R geradkettige, verzweigte oder cyclische Alkyl-Gruppen mit 1 bis 10 Kohlenstoff-Atomen darstellen, wobei jeweils solche mit 2 bis 6 Kohlenstoff-Atomen bevorzugt sind und besonders gute Resultate liefern. Desweiteren ist es bevorzugt, wenn sich einer oder mehrere Reste OR der allgemeinen Formel I von Oxoestern, β-Diketonen, Carbonsäuren, Ketocarbonsäuren oder Ketoalkoholen ableiten. Besonders bevorzugt ist es, wenn sich der Rest OR von Acetylaceton ableitet. Ohne Einschränkung der Allgemeinheit sind Beispiele für geeignete Zr- und Ti-Alkoholate Zr(OPrⁿ)₄, Ti(OPrⁱ)₄, Zr(OBu)₄, Ti(OEt)₄, Zr(AcAc)₂(OⁱPr)₂ oder Ti(AcAc)₂(OⁱPr)₂.

Bei bevorzugten Ausführungsformen des erfindungsgemäßen Verfahrens werden Zr- und Ti-Alkoholate im molaren Verhältnis von 53:47 eingesetzt.

Geeignete Bleicarboxylate sind z.B. Bleiadipat, Bleibenzoat, Bleicitrat, Bleicyclohexanbutyrat, Bleiformiat, Bleifumarat, Blei-12-hydroxystearat, Bleilactat, Bleilinolat, Bleimaleat, Bleinaphthenat, Bleioctanoat, Bleioleat, Bleioxalat, Bleipalmitat, Bleiphthalat, Bleisalicylat Bleistearat, Bleisuccinat, Bleitartrat oder Blei-2-hydroxy-2-methylpropionat. Zum Einsatz im erfindungsgemäßen Verfahren sind Bleiacetate der allgemeinen Formel II bevorzugt,

Pb(O-CO-CH₃)ₗ·mPbO·nH₂O (II),

in der l = 2 oder 4 ist, und m = 0 bis 2 und n = 0 bis 10 bedeutet. Dabei kann es sich um Blei(II)acetate, um Blei(IV)acetate oder auch um basische Bleiacetate handeln, wobei Pb(O-CO-CH₃)₂·3H₂O ganz besonders bevorzugt ist und besonders gute Resultate liefert. Eine weitere bevorzugte Bleiverbindung ist z.B. Pb(O-CO-CH₃)₄.

In den Bleicarboxylaten gegebenenfalls vorhandenes Kristallwasser bietet den Vorteil, daß es zur hydrolytischen Kondensation herangezogen werden kann. Die Bleicarboxylate können entweder in stöchiometrischen Mengen zugesetzt werden oder auch im Überschuß, wobei der molare Bleianteil zwischen 1 und 1.5 Mol liegt. Ein Bleiüberschuß bietet den Vorteil, daß der beim Tempervorgang durch PbO-Abdampfen auftretende Bleiverlust von Anfang an ausgeglichen wird.

Zur Herstellung der Lösung, die die Komponenten a), b) und c) enthält und deren Konzentration, bezogen auf das Produkt Pb(ZrₓTi₁₋ₓ)O₃, mindestens 0.5 molar ist, werden polare Lösungsmittel mit komplexierenden, chelatisierenden Eigenschaften eingesetzt. Bevorzugt werden hierfür Glycolether, Diole, mehrwertige Alkohole, Aminoalkohole, Glycerin, Hydroxythiole, Aminothiole, Dithiole, Diamine oder Mischungen derselben verwendet. Besonders bevorzugt ist 1.3-Propandiol.

Desweiteren ist es bevorzugt, wenn die Konzentration dieser Lösung mindestens 1 molar ist.

Die Herstellung dieser Lösung kann z.B. dadurch erfolgen, daß man die einzelnen Komponenten in den gewünschten Mengen zusammen gibt, oder daß man zunächst eine Lösung geringerer Konzentration fertigt, und daraus dann das Lösungsmittel nach üblichen Methoden bis zur gewünschten Konzentration entfernt. Es ist aber auch möglich, zunächst eine Lösung zu fertigen, daraus dann das Lösungsmittel soweit zu entfernen, bis ein viskoser Rückstand verbleibt, und diesen dann mit der gewünschten Menge des gleichen oder eines anderen Lösungsmittels zu verdünnen.

Anschließend wird der resultierenden Lösung, bestehend aus den Komponenten a), b) und c), zur hydrolytischen Kondensation Wasser zugegeben, und zwar, bezogen auf Pb(ZrₓTi₁₋ₓ)O₃, mindestens 2.5 Äquivalente, wobei mindestens 10 bis 20 Äquivalente Wasser bevorzugt sind. Die Wasserzugabe kann stufenweise oder auf einmal oder auch in Anwesenheit eines Lösungsvermittlers und/oder eines Kondensationskatalysators erfolgen, wie er für derartige Sol-Gel-Verfahren üblich ist.

Das Wasser kann entweder als solches oder als Mischung mit einem oder mehreren organischen Lösungsmitteln zugegeben werden. Bevorzugt ist es, wenn ein derartiges Lösungsmittel ebenfalls über eine gewisse Polarität und über komplexierende, chelatisierende Eigenschaften verfügt. Derartige Lösungsmittel wurden bereits bei der Beschreibung der Komponente a) näher erläutert. Besonders bevorzugt wird eine Mischung aus Wasser und aus einem oder mehreren polaren Lösungsmitteln mit komplexierenden, chelatisierenden Eigenschaften eingesetzt, deren Polarität geringer ist als die Polarität desjenigen Lösungsmittels oder Lösungsmittelgemisches, welches zur Herstellung der, bezogen auf Pb(ZrₓTi₁₋ₓ)O₃, mindestens 0.5 molaren Lösung der Komponenten a), b) und c) eingesetzt wurde. Wird z.B. für die Herstellung der Lösung der Komponenten a), b) und c) 1,3-Propandiol eingesetzt, so wird für die Hydrolyse eine Mischung aus Wasser und 2-Methoxyethanol ganz besonders bevorzugt verwendet,

Vorzugsweise wird die hydrolytische Kondensation bei Temperaturen durchgeführt, die zwischen Raumtemperatur und dem Siedepunkt des Lösungsmittels liegen. Niedrigere oder höhere Temperaturen sind ebenfalls möglich.

Nach der hydrolytischen Kondensation werden monolithische Naßgele erhalten, welche man nun bis über den Gelpunkt hinaus altern läßt. Dadurch wird das Gelgerüst durch Reifungsprozesse verfestigt. Die Reifung kann man z.B. bei Raumtemperatur oder auch bei erhöhten Temperaturen ablaufen lassen, wobei die Reifungszeit selbstverständlich von der Reifungstemperatur abhängig ist.

Eine direkte überkritische Trocknung des Naßgels ist wegen der hohen Siedepunkte der eingesetzten Lösungsmittel nicht möglich. Überraschenderweise wurde festgestellt, daß sich das polare, komplexierende und chelatisierende Lösungsmittel in den Poren des Naßgels durch überkritisch trocKenbare Lösungsmittel geringerer Polarität ersetzen läßt. Derartige geeignete Lösungsmittel sind z.B. Ethanol oder Isopropanol oder auch Mischungen derselben. Der Lösungsmittelaustausch kann z.B. dadurch erfolgen, daß man das Naßgel einfach in dieses Lösungsmittel(gemisch) einlegt, stehen läßt und die überstehende Flüssigkeit mehrmals wechselt, bis nur noch geringe Mengen der ursprünglichen Porenflüssigkeit im Überstand nachgewiesen werden können.

Wird als Hydrolyselösung z.B. ein Gemisch aus Isopropanol und Wasser eingesetzt, so treten in den oberen Schichten der Naßgele massive Risse und Abplatzungen auf.

Überraschenderweise wurde festgestellt, daß sich die Porenflüssigkeit der Naßgele in der erfindungsgemäßen Art und Weise ohne Rißbildung austauschen läßt.

Nach dem Austausch der Porenflüssigkeit wird das Naßgel unter überkritischen Bedingungen getrocknet. Diese sind z.B. für Isopropanol 236 °C und 4.76 MPa. Überraschenderweise werden trotz linearer Schrumpfung von bis zu 25 oder 30 % stabile, monolithische, hochporöse Aerogele erhalten. Überraschenderweise wurde festgestellt, daß das direkt im Anschluß an die überkritische Trocknung erhaltene Material bereits einen erheblichen kristallinen Phasenbestand an elementarem Blei aufweist, das nach Erhitzen auf z.B. über 340 °C in Bleioxid umgewandelt wird. Nach weiterer Temperaturbehandlung werden monolithische, hochporöse Bleititanat- bzw. Bleizirkonattitanat-Aerogele erhalten.

Überraschenderweise wurde festgestellt, daß sich Bleititanat- bzw. Bleizirkonattitanat-Aerogele durch Temperaturbehandlung ohne Rißbildung in die Perowskit-Phase transformieren lassen.

Überraschenderweise können mit dem erfindungsgemäßen Verfahren Lösungen mit hohen Bleikonzentrationen erhalten werden, die nach der hydrolytischen Kondensation zu Gelen mit deutlich erhöhtem Feststoffgehalten und mit stabilen anorganischen Netzwerken führen. Mit dem erfindungsgemäßen Verfahren werden stabile, hochporöse Materialien der Bleititanat- und Bleizirkonattitanat-Stöchiometrie erhalten, die sich ohne Zerstörung der Monolithe in die PerowskitStruktur überführen lassen. Alle Komponenten sind kommerziell leicht verfügbar, die Synthese der Vorstufen sowie die Hydrolyse und Nachbehandlungsschritte erfordern nur geringen labortechnischen Aufwand. Das erfindungsgemäße Verfahren stellt eine Eintopf-Reaktion dar, die nicht unter Schutzgas durchgeführt werden muß. Alle Edukte und Zwischenstufen sind nahezu unbegrenzt lagerfähig. Schon durch einfaches isothermes Tempern bei 600 °C lassen sich hochporöse Materialien mit Kristallstrukturen realisieren, wie sie für piezoelektrische Anwendungen erforderlich sind. Die Porenflüssigkeit der erfindungsgemäß hergestellten Naßgele kann ohne Rißbildung gegen solche Lösungsmittel ausgetauscht werden, mit denen eine überkritische Trocknung zu PT- und PZT-Aerogelen möglich ist. Die erfindungsgemäßen Aerogele lassen sich unter nahezu vollständigem Erhalt der Porosität durch Tempern in die für Piezokeramiken notwendige Kristallstruktur überführen. Durch Modifikation der Alterungsbedingungen und/oder des Trocknungsverfahrens kann entsprechend dem jeweiligen Anwendungsfall eine gezielten Einstellung von Dichte und Elastizität des Materials vorgenommen werden.

Die nach dem erfindungsgemäßen Verfahren hergestellten piezoaktiven Aerogele können z.B. als Ultraschallwandler eingesetzt werden.

Anhand eines Ausführungsbeispieles wird das erfindungsgemäße Verfahren näher erläutert.

### Beispiel :

1 mol Bleiacetat-Trihydrat wird in 400 ml 1.3-Propandiol bei 60 °C gelöst und zu 1 mol heftig gerührter Ti(AcAc)₂(OⁱPr)₂-Lösung (75 %, Aldrich) getropft. Diese Mischung wird 4 bis 6 Stunden bei 150 °C gerührt, bevor sie bei 60 °C Badtemperatur im Ölpumpenvakuum zu einem viskosen Rückstand eingeengt wird. Durch Auffüllen mit 1.3-Propandiol auf ein Gesamtvolumen von 1 Liter erhält man eine 1-molare Lösung der Bleititanat-Vorstufe. Versucht man dagegen den viskosen Rückstand mit Isopropanol anstelle von 1.3-Propandiol zu einer 1-molaren Precursor-Lösung aufzuarbeiten, fällt ein Blei-haltiger Niederschlag aus. Durch Mischen gleicher Volumina der 1.3-Propandiol-haltigen Precursor-Lösung mit einer 2-Methoxyethanol-Wasser-Mischung und Lagerung bei 50 °C erhält man innerhalb von 48 Stunden monolithische Naßgele, wenn pro Mol Bleititanat 20 Äquivalente Wasser in der Hydrolyselösung eingesetzt werden. Die Gele werden nach der Hydrolyse ca. 1 Woche bei 50 °C gelagert, damit sich das Gelgerüst durch Reifungsprozesse festigen kann.
Eine direkte überkritische Trocknung des Naßgels ist wegen der hohen Siedepunkte von 1.3-Propandiol (214°C) und 2-Methoxyethanol nicht möglich. Zum Austausch der Porenflüssigkeit wird das resultierende Naßgel in Isopropanol eingelegt und die Austauschflüssigkeit wird mehrmals gewechselt, bis sich nur noch Spuren der ursprünglichen Lösungsmittel im Überstand nachweisen lassen. Das resultierende Naßgel wird in Isopropanol unter überkritischen Bedingungen (236 °C, 4.76 MPa) getrocknet. Man erhält trotz linearer Schrumpfung von 25 bis 30 % monolithische Aerogele, die gemäß chemischer Analyse ein äquimolares Verhältnis von Blei zu Titan zeigen. Das Material ist durch Pyrolysereaktionen während der überkritischen Trocknung schwarz gefärbt und zeigt folgende Eigenschaften.

| | | |
|---|---|---|
| Bulkdichte | 0.60 - 0.75 g cm⁻³ | aus Masse und Volumen berechnet |
| Skelettdichte | 4.8 - 6.3 g cm⁻³ | He-Pyknometrie |
| spez. Oberfläche | 40 - 70 m² g⁻¹ | BET-Messungen |
| Kohlenstoff-Gehalt | 2 - 6 % | CHN-Analyse |

Entgegen aller Erwartungen weist das direkt nach der überkritischen Trocknung erhaltene Material bereits einen erheblichen kristallinen Phasenbestand an elementarem Blei auf, das nach Erhitzen auf 340 °C in Bleioxid umgewandelt wird. Durch 1-stündige isotherme Temperaturbehandlung bei 600 °C an Luft lassen sich Stücke des Materials als Monolithe unter geringer Schrumpfung in tetragonales Bleititanat überführen. Die errechnete Porosität des Endproduktes überschreitet 80 %.

## Patentansprüche

1. Verfahren zur Herstellung von poröser Keramik der Zusammensetzung
Pb(ZrₓTi₁₋ₓ)O₃,
mit x = 0 bis 0.9, mit folgenden Merkmalen:
• man fertigt, bezogen auf Pb(ZrₓTi₁₋ₓ)O₃, eine mindestens 0.5-molare Lösung die folgende Komponenten enthält:
a) eines oder mehrere polare Lösungsmittel mit komplexierenden, chelatisierenden Eigenschaften,
b) eines oder mehrere Pb(II)- und/oder Pb(IV)-Carboxylate, die sich von substituierten oder unsubstituierten, einwertigen oder mehrwertigen, gesättigten oder ungesättigten, geradkettigen, verzweigten, cyclischen oder aromatischen Carbonsäuren oder Hydroxycarbonsäuren mit 1 bis 18 Kohlenstoff-Atomen ableiten, und
c) eine oder mehrere Titan- und gegebenenfalls Zirkonium-Verbindungen, die sich von Verbindungen der allgemeinen Formel I ableiten,
M(OR)₄ (I)
in der M Titan oder Zirkonium bedeutet und die Reste R gleich oder verschieden sind und geradkettige, verzweigte oder cyclische Alkyl- oder Alkenyl-Reste mit 1 bis 10 Kohlenstoff-Atomen darstellen, die gegebenenfalls eine oder mehrere Carbonyl- und/oder Ester- und/oder Carboxyl-Funktionen aufweisen;
• zur hydrolytischen Kondensation versetzt man die resultierende Lösung mit mindestens 2.5 Äquivalenten Wasser, bezogen auf Pb(ZrₓTi₁₋ₓ)O₃, gegebenenfalls in Anwesenheit eines Lösungsvermittlers und/oder eines Katalysators;
• man läßt das resultierende Gel bis über den Gelpunkt hinaus altern;
• man ersetzt das polare Lösungsmittel in den Poren des Gels durch ein nicht chelatisierendes, überkritisch trockenbares Lösungsmittel geringerer Polarität;
• man trocknet das resultierende Gel unter überkritischen Bedingungen;
• man tempert das resultierende Aerogel bis zur vollständigen Kristallisation der gewünschten Phase.

2. Verfahren nach Anspruch 1, **dadurch gekennzeichnet,** daß sich einer oder mehrere Reste OR in der allgemeinen Formel I ableiten von Oxoestern, β-Diketonen, Carbonsäuren, Ketocarbonsäuren oder Ketoalkoholen.

3. Verfahren nach Anspruch 2, **dadurch gekennzeichnet**, daß sich der Rest OR in der allgemeinen Formel I von Acetylaceton ableitet.

4. Verfahren nach einem der Ansprüche 1 bis 3, **dadurch gekennzeichnet**, daß als polare, komplexierende, chelatisierende Lösungsmittel Glycolether, Diole, mehrwertige Alkohole, Aminoalkohole, Glycerin, Hydroxythiole, Aminothiole, Dithiole, Diamine oder Mischungen derselben eingesetzt werden.

5. Verfahren nach einem oder mehreren der Ansprüche 1 bis 4, **dadurch gekennzeichnet**, daß zur Kondensation eine Mischung aus Wasser und aus einem oder mehreren polaren Lösungsmitteln mit komplexierenden, chelatisierenden Eigenschaften zugegeben wird.

6. Verfahren nach einem oder mehreren der Ansprüche 1 bis 5, **dadurch gekennzeichnet**, daß man das polare, komplexierende, chelatisierende Lösungsmittel in den Poren des Gels durch Ethanol oder Isopropanol oder durch eine Mischung derselben ersetzt.

7. Verfahren nach einem oder mehreren der Ansprüche 1 bis 6, **dadurch gekennzeichnet**, daß man zur hydrolytischen Kondensation die resultierende Lösung mit 10 bis 20 Äquivalenten Wasser versetzt, bezogen auf Pb(ZrₓTi₁₋ₓ)O₃, gegebenenfalls in Anwesenheit eines Lösungsvermittlers und/oder eines Katalysators.

8. Verfahren nach einem oder mehreren der Ansprüche 1 bis 7, **dadurch gekennzeichnet**, daß man die hydrolytische Kondensation bei einer Temperatur durchführt, die zwischen Raumtemperatur und dem Siedepunkt des Lösungsmittels liegt.

9. Verfahren nach einem oder mehreren der Ansprüche 1 bis 8, **dadurch gekennzeichnet**, daß man zur hydrolytischen Kondensation eine Mischung aus Wasser und aus einem oder mehreren polaren Lösungsmitteln mit komplexierenden, chelatisierenden Eigenschaften einsetzt, wobei die Polarität des Lösungsmittels geringer ist als die Polarität des Lösungsmittels zur Herstellung der, bezogen auf Pb(ZrₓTi₁₋ₓ)O₃, mindestens 0.5 molaren Lösung.

10. Verfahren nach einem oder mehreren der Ansprüche 1 bis 8, **dadurch gekennzeichnet**, daß man, bezogen auf Pb(ZrₓTi₁₋ₓ)O₃, eine mindestens 1 molare Lösung fertigt.

## Claims

1. Method for producing porous ceramic with the composition
Pb(ZrₓTi₁₋ₓ)O₃,
with x = 0 to 0.9, with the following features:
• there is prepared, with respect to Pb(ZrₓTi₁₋ₓ)O₃, a solution which is at least 0.5 molar, containing the following constituents:
a) one or more polar solvents having complexing, chelate-forming properties,
b) one or more Pb(II)- and/or Pb(IV)- carboxylates which are derived from substituted or unsubstituted, monovalent or multivalent, saturated or unsaturated, unbranched, branched, cyclic or aromatic carboxylic acids or hydroxycarboxylic acids with 1 to 18 carbon atoms, and
c) one or more titanium- and possibly zirconium compounds, which are derived from compounds of the general formula I
M(OR)₄ (I)
in which M means titanium or zirconium and the radicals R are the same or different and represent unbranched, branched or cyclic alkyl- or alkenyl radicals with 1 to 10 carbon atoms, which possibly have one or more carbonyl- and/or ester- and/or carboxyl functions;
• for hydrolytic condensation, the resultant solution is mixed with at least 2.5 equivalents of water, relative to Pb(ZrₓTi₁₋ₓ)O₃, possibly in the presence of a solubility promoter and/or of a catalyst;
• the resultant gel is left to mature until above the gel point;
• the polar solvent is replaced in the pores of the gel by means of a solvent of low polarity which is not chelate-forming and can be dried supercritically;
• the resultant gel is dried under supercritical conditions;
• the resultant aerogel is annealed until complete crystallisation of the desired phase is effected.

2. Method according to claim 1, **characterised in that** one or more radicals OR in the general formula I is derived from oxoesters, β-diketones, carboxylic acids, ketocarboxylic acids or ketone alcohols.

3. Method according to claim 2, **characterised in that** the radical OR in the general formula I is derived from acetylacetone.

4. Method according to one of the claims 1 to 3, **characterised in that** glycol ethers, diols, multivalent alcohols, amino alcohols, glycerine, hydroxythiols, aminothiols, dithiols, diamines or mixtures of the same are used as polar, complexing, chelate-forming solvents.

5. Method according to one or more of the claims 1 to 4, **characterised in that** for condensation, a mixture of water and of one or more polar solvents which have complexing, chelate-forming properties is added.

6. Method according to one or more of the claims 1 to 5, **characterised in that** polar complexing, chelate-forming solvents are replaced in the pores of the gel by means of ethanol or ispropanol or by means of a mixture of the same.

7. Method according to one or more of the claims 1 to 6, **characterised in that** for hydrolytic condensation, the resultant solution is mixed with 10 to 20 equivalents of water with respect to Pb(ZrₓTi₁₋ₓ)O₃, possibly in the presence of a solubility promoter and/or a catalyst.

8. Method according to one or more of the claims 1 to 7, **characterised in that** hydrolytic condensation is performed at a temperature which lies between room temperature and the boiling point of the solvent.

9. Method according to one or more of the claims 1 to 8, **characterised in that** a mixture of water and of one or more polar solvents with complexing, chelate-forming properties is used for hydrolytic condensation, the polarity of the solvent being lower than the polarity of the solvent for production of the solution which is at least 0.5 molar with respect to Pb(ZrₓTi₁₋ₓ)O₃.

10. Method according to one or more of the claims 1 to 8, **characterised in that** with respect to Pb(ZrₓTi₁₋ₓ)O₃, a solution is prepared which is at least 1 molar.

## Revendications

1. Procédé de production de céramique poreuse de composition
Pb(ZrₓTi₁₋ₓ)O₃,
dans laquelle x = 0 à 0,9, avec les caractéristiques suivantes :
- On prépare une solution dont la concentration, par rapport à Pb(ZrₓTi₁₋ₓ)O₃, est d'au moins 0,5 molaire, et. qui contient les composants suivants:
a) un ou plusieurs solvants à propriétés complexantes et chélatantes,
b) un ou plusieurs carboxylates de Pb(II) et/ou de Pb(IV) qui dérivent d'acides carboxyliques ou d'acides hydroxy-carboxyliques ayant de 1 à 18 atomes de carbone substitués ou non substitués, monovalents ou polyvalents, saturés ou insaturés, à chaîne droite, ramifiée, cyclique ou aromatique, et
c) un ou plusieurs composés de titane et le cas échéant de zirconium qui dérivent de composés de formule générale I,
M(OR)₄ (I)
dans laquelle M représente le titane ou le zirconium et les radicaux R sont identiques ou différents et représentent des radicaux alkyle ou alcényle à chaîne droite, ramifiée ou cyclique, ayant de 1 à 10 atomes de carbone qui le cas échéant présentent une ou plusieurs fonctions carbonyle et/ou ester et/ou carboxyle ;
- Pour la condensation par hydrolyse, on mélange la solution résultante avec au moins 2,5 équivalents d'eau, par rapport à Pb(ZrₓTi₁₋ₓ)O₃, le cas échéant en présence d'un tiers solvant et/ou d'un catalyseur ;
- On laisse vieillir le gel résultant jusqu'au dessus du point de gélification ;
- On remplace le solvant polaire dans les pores du gel par un solvant non chélatant, séchable de façon hypercritique, de faibles polarité ;
- On sèche le gel résultant dans des conditions hypercritiques ;
- On égalise la température de l'aérogel résultant jusqu'à cristallisation complète de la phase désirée.

2. Procédé selon la revendication 1,
caractérisé en ce qu'
un ou plusieurs radicaux OR dans la formule générale I dérivent d'oxoesters, de β-dicétones, d'acides carboxyliques, d'acides cétocarboxyliques ou de cétoalcools.

3. Procédé selon la revendication 2,
caractérisé en ce que
le radical OR dans la formule générale I dérive de l'acétylacétone,

4. Procédé selon l'une des revendications 1 à 3,
caractérisé en ce qu'
on utilise comme solvants polaires complexants et chélatants les éthers de glycol, les diols, les alcools polyvalents, les aminoalcools, les glycérines, les hydroxythiols, les aminothiols, les dithiols, les diamines ou leurs mélanges.

5. Procédé selon une ou plusieurs des revendications 1 à 4,
caractérisé en ce que
pour la condensation on ajoute un mélange d'eau et d'un ou plusieurs solvants polaires à propriétés complexantes et chélatantes.

6. Procédé selon une ou plusieurs des revendications 1 à 5,
caractérisé en ce qu'
on remplace le solvant polaire, complexant et chélatant dans les pores du gel par de l'éthanol ou de l'isopropanol ou par un mélange de ces corps.

7. Procédé selon une ou plusieurs des revendications 1 à 6,
caractérisé en ce que
pour la condensation par hydrolyse on mélange la solution résultante avec de 1 à 20 équivalents d'eau, par rapport à Pb(ZrₓTi₁₋ₓ)O₃, le cas échéant en présence d'un tiers solvant et/ou d'un catalyseur.

8. Procédé selon une ou plusieurs des revendications 1 à 7,
caractérisé en ce qu'
on conduit la condensation par hydrolyse à une température qui se situe entre la température ambiante et le point d'ébullition du solvant.

9. Procédé selon une ou plusieurs des revendications 1 à 8,
caractérisé en ce que
pour la condensation par hydrolyse on utilise un mélange d'eau et d'un ou plusieurs solvants polaires à propriétés complexantes et chélatantes, la polarité du solvant étant plus faible que la polarité du solvant pour la préparation d'une solution d'au moins 0,5 molaire par rapport Pb(ZrₓTi₁₋ₓ)O₃.

10. Procédé selon une ou plusieurs des revendications 1 à 8,
caractérisé en ce qu'
on prépare par rapport à Pb(ZrₓTi₁₋ₓ)O₃, une solution au moins 1 fois molaire.
